## Europäisches Patentamt

(19) **European Patent Office**

**Office européen des brevets**

(11) Veröffentlichungsnummer: **0 140 094**

**B1**

---

(12) **EUROPÄISCHE PATENTSCHRIFT**

(45) Veröffentlichungstag der Patentschrift:
16.12.87

(51) Int. Cl.⁴: **H 04 N 11/04,** H 04 N 7/13

(21) Anmeldenummer: **84110680.6**

(22) Anmeldetag: **12.09.84**

---

(54) Verfahren zur Taktratenkonversion von digitalisierten Fernsehsignalen.

---

(30) Priorität: **14.09.83 DE 3333225**

(43) Veröffentlichungstag der Anmeldung:
**08.05.85 Patentblatt 85/19**

(45) Bekanntmachung des Hinweises auf die Patenterteilung:
**16.12.87 Patentblatt 87/51**

(84) Benannte Vertragsstaaten:
**AT CH DE FR IT LI**

(56) Entgegenhaltungen:
**EP-A-0 013 124**
**US-A-3 666 888**
**US-A-4 069 504**
**US-A-4 074 307**
**US-A-4 224 481**

**SMPTE JOURNAL, Band 90, Nr. 10, Oktober 1981, Seiten 945-948, New York, USA; J.D. LOWRY: "Coder/decoder units for RGB and NTSC signals" IEEE TRANSACTIONS ON COMMUNICATIONS, Band COM-25, Nr. 7, Juli 1977, Seiten 707-712, New York, USA; B.G. HASKELL: "Sampling rate conversion for NTSC color television"**

(73) Patentinhaber: **Siemens Aktiengesellschaft Berlin und München, Wittelsbacherplatz 2, D-8000 München 2 (DE)**

(72) Erfinder: **Grallert, Hans- Joachim, Dr., Tannenfleckstrasse 30, D-8038 Gröbenzell (DE)**
Erfinder: **Starck, Alexander, Dipl.- Phys., Terhallestrasse 45, D-8000 München 90 (DE)**

---

## Beschreibung

Die Erfindung betrifft ein Verfahren zur Taktratenkonversion von digitalisierten Fernsehsignalen zur Erzeugung eines Fernsehsignals mit einer vorgegebenen Verarbeitungstaktrate bei einer feststehenden Abtasttaktrate des codierten Fernsehsignals.

Bei der Übertragung von Schwarzweiß- und Farbfernsehsignalen sind die Taktrate zur Abtastung des analogen Fernsehsignals und die Taktrate zur Weiterverarbeitung bzw. Übertragung des digitalisierten Fernsehsignals fest vorgegeben. Oftmals stimmen diese Taktraten nicht überein und weisen auch kein rationales Verhältnis auf. Dann muß eine Taktratenkonversion erfolgen, durch die Fernsehsignale mit der vorgegebenen Verarbeitungstaktrate gewonnen werden. Diese Fernsehsignale können zur weiteren Datenreduktion durch ein DPCM-Verfahren einem entsprechenden Codierer zugeleitet werden.

Als Fernsehsignale werden sowohl die Luminanz- als auch die Chrominanzsignale verstanden. Zur Zeit ist das Verfahren besonders für Luminanzsignale interessant.

Es sind verschiedene Verfahren zur Taktratenkonversion bekannt. Hierbei wird ein Datenstrom mit einer ersten Taktfrequenz in einen zweiten Datenstrom mit einer anderen Taktfrequenz umgesetzt. Ein solches Verfahren ist in der Zeitschrift "Frequenz", 36, 1982, 10, Seiten 273 bis 279, beschrieben. Hierzu wird ein zeitinvariantes lineares Filter verwendet, dem die digitalisierten Signalwerte mit der ersten Taktfrequenz zugeführt werden, und daß am Ausgang über ein Summierglied die digitalisierten Signale mit einer zweiten Taktfrequenz abgibt. Dieses Konversionsverfahren wird bei der vorliegenden Erfindung mitverwendet. Das Verfahren setzt jedoch voraus, daß das Verhältnis der zweiten Taktrate zur ersten Taktrate einen ratronalen Wert ergibt. Dies ist jedoch bei den heute üblichen Verarbe-tungstaktraten meist nicht der Fall.

Es ist daher die Aufgabe der Erfindung, ein Taktratenkonversionsverfahren für digitalisierte Fernsehsignale anzugeben, das die Gewinnung des Fernsehsignales mit einer vorgegebenen Verarbeitungstaktrate auch bei einem nichtrationalen Taktverhältnis ermöglicht.

Ausgehend vom einleitend beschriebenen Stand der Technik, wird die Erfindung dadurch gelöst, daß das Fernsehsignal durch Taktratenkonversion mit einem eine rationale Zahl darstellenden Umsetzungsfaktor in ein zweites Fernsehsignai mit einer zweiten Taktrate, die nahe an der Verarbeitungstaktrate liegt, umgesetzt wird, daß die Datenwörter des zweiten Fernsehsignals mit der zweiten Taktrate in einen Speicher eingeschrieben werden und daß von den eingeschriebenen Datenwörtern einer jeden Fernsehzeile mit der Verarbeitungstaktrate eine hiervon abweichende Anzahl von Datenwörtern ausgelesen wird.

Durch die Erfindung wird das äußerst schwierige Problem der Taktratenkonversion bei nichtrationalen Taktverhältnissen durch das Weglassen oder Hinzufügen von wenigen (m) digitalen Signalwerten (Bildpunkten) auf einfache Weise gelöst. Als Fernsehsignal wird hier allgemein das Luminanzsignal oder auch ein Chrominanzsignal bezeichnet. Dies wird über einen Speicher erreicht, in den z. B. alle Bildpunkte einer Fernsehzeile als Datenwörter eingeschrieben werden, jedoch am Anfang und Ende jeder Fernsehzeile einige Bildpunkte nicht weitergesendet werden. Das Einlesen in den Speicher erfolgt mit der durch den Abtastratenkonverter erzeugten zweiten Taktfrequenz, das Auslesen aus dem Speicher erfolgt mit der vorgegebenen Verarbeitungstaktrate.

Die Realisation eines solchen Verfahrens bereitet keinerlei Schwierigkeiten und benötigt nur einen geringen Aufwand. Das Weglassen einiger Bildpunkte kann natürlich ebenso bei dem Einschreiben in den Speicher wie beim Auslesen bei dem Speicher erfolgen. Die geringe Verzerrung der ausgelesenen Fernsehbilder ist praktisch nicht zu bemerken. Sie kann außerdem durch eine entsprechende Justierung des Empfangsgerätes ausgelichen werden.

Es ist vorteilhaft, daß das zweite Fernsehsignal in einem First-In/First-Out-Speicher zwischengespeichert wird.

Aufwandsmäßig läßt sich das Verfahren am günstigsten durch einen First-In/First-Out-Speicher (FIFO) durchführen.

Es ist zweckmäßig, daß als Abtastrate 13,5 MHz, als zweite Taktrate 10,125 MHz und als Umsetzfaktor 3/4 vorgesehen ist.

Die Umsetzung des digitalisierten Fernsehsignals mit einer Taktrate von 13,5 MHz in ein digitales Fernsehsignal mit einer zweiten Taktfrequenz von 10,125 MHz ist zweckmäßig, da nur ein einfacher Umsetzfaktor von 3/4 realisiert werden muß.

Es ist vorteilhaft, daß von jeweils 526 Datenwörtern einer Fernsehzeile des zweiten Fernsehsignals die ersten drei und die letzten drei nicht ausgelesen werden. Durch Fortlassen dieser Datenwörter wird das Fernsehbild nur wenig verändert.

Weitere vorteilhafte Ausbildungen des Verfahrens sind in den übrigen Unteransprüchen angegeben.

Das Verfahren wird anhand eines Prinzipschaltbildes zur Taktratenkonversion näher erläutert.

Es zeigen:.

Fig. 1 das Prinzipschaltbild zur Taktratenkonversion und

Fig. 2 einen Ausschnitt eines Fernsehbildes.

Das analoge Fernsehsignal AS wird einer Abtrennschaltung 1 über deren Eingang $1_1$ zugeführt. Der erste Ausgang der Abtrennschaltung $1_2$ ist mit dem Eingang eines A/D-Wandlers 2 verbunden, der auch eine Abtast- und Halteschaltung enthält. Der zweite Ausgang $1_3$ der Abtrennschaltung ist mit dem Eingang $5_1$ eines Taktgenerators 5 verbunden. Der Ausgang des A/D-Wandlsers 2 ist mit dem Eingang $3_1$ eines digitalen Tiefpasses 3 verbunden, dessen Ausgang $3_3$ mit dem Dateneingang $4_1$ eines Taktratenkonverters 4 verbunden ist, dessen Ausgang $4_4$ an den Dateneingang $6_1$ eines Speichers 6 angeschlossen ist, der als First-In/First-Out-Speicher (FIFO) ausgeführt ist. Der Datenausgang des Speichers 6 ist mit $6_4$ bezeichnet. Der Taktgenerator 5 enthält beispielsweise mehrere Phasenregelkreise (PLL), die zur Erzeugung der Arbeitstakte mit den Frequenzen $f_{T1}$, $f_{T2}$ und $f_{T3}$ dienen. An einem Ausgang $5_2$ wird die Abtastfrequenz $f_{T1}$ dem Analog/ Digital-Umsetzer 2 und dem digitalen Tiefpaß 3 über dessen Takteingang $3_2$ zugeführt. Dieselbe Frequenz wird dem Taktratenkonverter 4 über dessen Takteingang $4_2$ zugeführt. An dem Ausgang $5_3$ des Taktgenerators 5 wird eine zweite Taktfrequenz $f_{T2}$ abgegeben, die dem Taktratenkonverter 4 als Auslesetakt über dessen zweiten Takteingang $4_3$ und dem Speicher 6 über dessen ersten Takteingang $6_2$ zugeführt wird. Die Verarbeitungstaktrate $f_{T3}$ wird von einem dritten Taktausgang $5_4$ des Taktgenerators dem zweiten Takteingang $6_3$ des Speichers 6 zugeführt. Außerdem werden die Synchronimpulse SI am Ausgang $5_5$ des Taktgenerators 5 abgegeben.

In diesem Ausführungsbeispiel wird aus einem geschlossen codierten Farbfernsehsignal FS ein Luminanzsignal, im weiteren Text allgemein als Fernsehsignal bezeichnet, gewonnen.

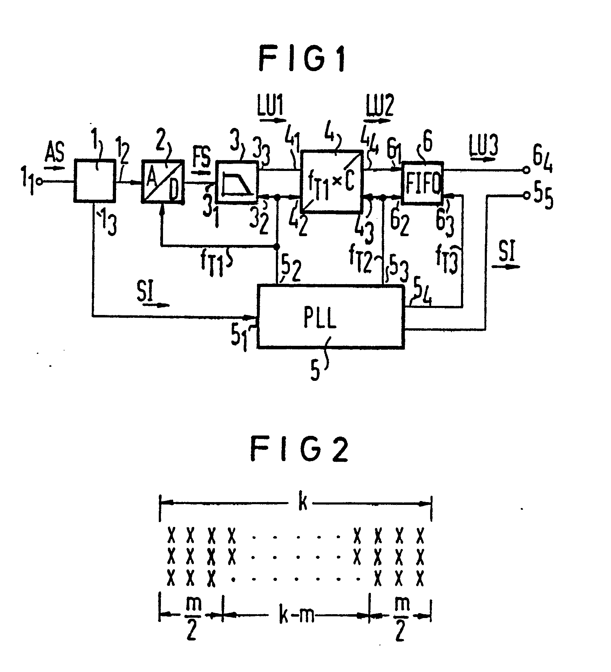

Aus dem analogen Fernsehsignal AS wird über den Analog/Digital-Wandler 2 ein digitalisiertes Farbfernsehsignal FS gewonnen. Durch den Tiefpaß 3, dessen Grenzfrequenz bei ca. 3,9 MHz liegt, wird das Fernsehsignal LU1 aus dem Farbfernsehsignal herausgefiltert. Der Taktratenkonverter 4 setzt das Fernsehsignal LU1 in ein zweites Fernsehsignal LU2 um, dessen Frequenz nahe der Verarbeitungstaktfrequenz $f_{T3}$ liegt. Erfolgte die Abtastung des analogen Fernsehsignals AS mit 13,5 MHz, so weist das Fernsehsignal LU1 am Ausgang des digitalen Tiefpasses 3 dieselbe Datenwortrate auf. Durch den Taktratenkonverter 4 wird die Datenwortrate auf 10,125 MHz umgesetzt. Der Umsetzungsfaktor C des Taktratenkonverters 4 beträgt hierbei 3/4. Mit einem Takt derselben Frequenz $f_{T2}$ werden die Datenwörter in den Speicher 6 eingeschrieben. Das Auslesen erfolgt mit einer vorgegebenen Verarbeitungstaktrate von 10 MHz. Jeweils die ersten drei ($\frac{m}{2}$) und die letzten drei Datenwörter des Luminanzsignals LU2 werden bei Verwendung eines FIFO-Speichers nicht eingeschrieben und somit auch nicht ausgelesen (Fig. 2). Die zweite Taktfrequenz $f_{T2}$ ist mit der Verarbeitungstaktrate $f_{T3}$ über einen Phasenregelkreis synchronisiert. Hierzu werden die Zeilenimpulse verwendet, die in den Synchronimpulsen SI enthalten sind. Hierdurch wird auch eine einfache Unterdrückung des Einschreibvorganges durch die Sperrung des zum Einschreiben verwendeten Taktes möglich.

Die Synchronimpulse SI werden im allgemeinen getrennt von dem aus dem Speicher 6 ausgelesenen Fernsehsignal 3 abgegeben.

## Patentansprüche

1. Verfahren zur Taktratenkonversion von digitalisierten Fernsehsignalen zur Erzeugung eines Fernsehsignals (LU3) mit einer vorgegebenen Verarbeitungstaktrate ($f_{T3}$) aus einem codierten Fernsehsignal (LU1) mit einer feststehenden Abtasttaktrate ($f_{T1}$), dadurch gekennzeichnet, daß das codierte Fernsehsignal (LU1) durch Taktratenkonversion mit einem eine rationale Zahl darstellenden Umsetzungsfaktor (C ) in ein zweites Fernsehsignal (LU2) mit einer zweiten Taktrate ($f_{T2}$), die nahe an der Verarbeitungstaktrate ($f_{T3}$) liegt, umgesetzt wird, daß die Datenwörter des zweiten Fernsehsignals (LU2) mit der zweiten Taktrate ($f_{T2}$) in einen Speicher (6) eingeschrieben werden und daß von den (k) eingeschriebenen Datenwörtern einer jeden Fernsehzeile mit der Verarbeitungstaktrate ($f_{T3}$) eine hiervon abweichende Anzahl (k ± m) von Datenwörtern ausgelesen wird.

2. Verfahren nach Anspruch 1, dadurch gekennzeichnet, daß das zweite Fernsehsignal (LU2) in einem First-In/First-Out-Speicher zwischengespeichert wird.

3. Verfahren nach Anspruch 1 oder Anspruch 2, dadurch gekennzeichnet, daß als Abtastrate ($f_{T1}$) 13,5 MHz, als zweite Taktrate ($f_{T2}$) 10,125 MHz und als Umsetzfaktor (C) 3/4 vorgesehen ist.

4. Verfahren nach Anspruch 3, dadurch gekennzeichnet, daß bei einer Verarbeitungstaktrate von 10 MHz und bei 526 Datenwörter in einer Fernsehzeile des zweiten Fernsehsignals (LU2) jeweils die ersten drei und die letzten drei Datenwörter nicht ausgelesen werden.

5. Verfahren nach Anspruch 1 oder Anspruch 2, dadurch gekennzeichnet, daß, wenn bei jeder Fernsehzeile mehr Datenwörter ausgelesen werden sollen als eingeschrieben wurden, die zusätzlich ausgelesenen Datenwörter dem Luminanzwert Schwarz oder Grau entsprechen.

6. Verfahren nach einem der vorhergehenden Ansprüche, dadurch gekennzeichnet, daß als Fernsehsignal (LU1) das Luminanzsignal verwendet wird, das durch einen digitalen Tiefpaß (3) aus einem geschlossen codierten Farbfernsehsignal (FS) selektiert wird.

7. Verfahren nach einem der vorhergehenden Ansprüche, dadurch gekennzeichnet, daß die benötigten Taktraten ($f_{T1}$, $f_{T2}$, $f_{T3}$) in einer Takterzeugung (5) mit mindestens einem Phasenregelkreis gewonnen wurden.

8. Verfahren nach Anspruch 1, dadurch gekennzeichnet, daß als Umsetzungsfaktor (C) ein Bruch mit möglichst kleinem Zähler und mit einem möglichst kleinen Nenner verwendet wird.

**Claims**

1. A method of clock rate conversion of digitalised television signals for the generation of a television signal (LU3) having a predetermined processing clock rate ($f_{T3}$) from a coded television signal (LU1) having a fixed sampling clock rate ($f_{T1}$), <u>characterised in</u> that the coded television signal (LU1) is converted by clock rate conversion, by means of a conversion factor (C) which represents a rational number, into a second television signal (LU2) having a second clock rate ($f_{T2}$) which is close to the processing clock rate ($f_{T3}$), that the data words of the second television signal (LU2) are input with the second clock rate ($f_{T2}$) into a store (6), and that of the (k) input data words in each television line, a different number (k $\pm$ m) of data words is read out with the processing clock rate ($f_{T3}$).

2. A method as claimed in claim 1, <u>characterised in</u> that the second television signal (LU2) is intermediately stored in a first-in/first-out store.

3. A method as claimed in claim 1 or 2, <u>characterised in</u> that 13.5 MHz is provided as sampling rate ($f_{T1}$), 10.125 MHz is provided as second clock rate ($f_{T2}$) and 3/4 is provided as conversion factor (C).

4. A method as claimed in claim 3, <u>characterised in</u> that where the procesaing clock rate is 10 MHz and where a television line of the second television signal (LU2) comprises 526 data words, the first three and the last three data words are not read out.

5. A method as claimed in claim 1 or claim 2, <u>characterised in</u> that if more data words are to be read out in each television line than have been input, the additionally read data words correspond to the luminance value black or grey.

6. A method as claimed in one of the preceding claims, <u>characterised in</u> that the luminance signal which is selected by a digital low-pass filter (3) from a closed-coded colour television signal (FS) is used as television signal (LU1).

7. A method as claimed in one of the preceding claims, <u>characterised in</u> that the necessary clock rates ($f_{T1}$, $f_{T2}$, $f_{T3}$) have been obtained in a clock generator (5) comprising at least one phase regulating circuit.

8. A method as claimed in claim 1, <u>characterised in</u> that a fraction comprising the smallest possible numerator and the smallest possible denominator is used as conversion factor (C).

**Revendications**

1. Procédé pour convertir des fréquences d'horloge de signaux de télévision numérisés pour obtenir un signal de télévision (LU3) possédant une fréquence d'horloge de traitement prédéterminée ($f_{T3}$) à partir d'un signal de télévision codé (LU1) possédant une fréquence d'horloge d'échantillonnage fixe ($f_{T1}$), caractérisé par le fait que le signal de télévision codé (LU1) est converti par conversion de la fréquence d'horloge, exécutée avec un facteur de conversion (C) qui représente un nombre rationnel, en un second signal de télévision (LU2) possédant une seconde fréquence d'horloge ($f_{T2}$), qui est proche de la fréquence d'horloge de traitement ($f_{T3}$), que les mots de données du second signal de télévision (LU2) sont enregistrés avec la seconde fréquence d'horloge ($f_{T2}$) dans une mémoire (6) et que parmi les (k) mots de données enregistrés de chaque ligne de télévision, un nombre (k + m ) de mots de données, qui diffère du nombre des données enregistrées sont lus avec la fréquence d'horloge de traitement ($f_{T3}$).

2. Procédé suivant la revendication 1, caractérisé par le fait que le second signal de télévision (LU2) est mémorisé temporairement dans une mémoire premier-entré premier-sorti .

3. Procédé suivant la revendication 1 ou 2, caractérisé par le fait que l'on prévoit 13,5 MHz comme fréquence d'échantillonnage ($f_T$), 10,125 MHz comme seconde fréquence d'horloge ($f_N$) et 3/4 en tant que facteur de conversion (C).

4. Procédé suivant la revendication 3, caractérisé par le fait que dans le cas d'une fréquence d'horloge de traitement de 10 MHz et dans le cas de la présence de 526 mots de données dans une ligne de télévision du second signal de télévision (LU2), respectivement les trois premiers mots de données et les trois derniers mots de données ne sont pas lus.

5. Procédé suivant la revendication 1 ou 2, caractérisé par le fait que, lorsque, dans chaque ligne de télévision, plusieurs mots de données doivent être lus comme ils ont été enregistrés, les mots de données lus en suppléments correspondent à la valeur de luminance noir ou gris.

6. Procédé suivant l'une des revendications précédentes, caractérisé par le fait qu'on utilise, comme signal de télévision (LU1), le signal de luminance qui est sélectionné par un filtre passe-bas numérique (3) à partir d'un signal de télévision en couleurs codé en bloc (FS).

7. Procédé suivant l'une des revendications précédentes, caractérisé par le fait que les fréquences d'horloge requises ($f_{T1}$,$f_{T2}$,$f_{T3}$) sont obtenues dans un générateur de cadences (5) comportant au moins un circuit de régulation de phase.

8. Procédé suivant la revendication 1, caractérisé par le fait qu'on utilise, comme facteur de conversion (C), une fraction possédant un numérateur aussi faible que possible et un dénominateur aussi faible que possible.

# FIG 1

# FIG 2